# EUROPEAN PATENT APPLICATION

(11) **EP 4 586 486 A1**
(43) Date of publication of application: **16.07.2025**
(21) Application number: 24305086.1
(22) Date of filing: 12.01.2024
(51) Int. Cl.: H02M 5/293, H02M 5/458, H02M 7/12, H02M 7/162, H02M 1/36, H02M 1/00, G06N 20/00

(54) **DC-LINK VOLTAGE RAMP-UP**

(71) Applicant: Schneider Toshiba Inverter Europe SAS, 27120 Pacy-sur-Eure (FR)
(72) Inventor: LOIZELET, Philippe, 27120 LE PLESSIS HÉBERT (FR)
(74) Representative: Plasseraud IP

(57) **Abstract**

Examples include a computer-implemented method for controlling a ramp-up of a voltage in a DC-link, a computer-readable storage medium, a variable speed drive, and a system comprising a variable speed drive configured to carry out the method.

## Description

### BACKGROUND

Electric motors are nowadays controlled by variable speed drives (VSD), also called variable frequency drives (VFD), or voltage-source inverters (VSI).

A variable speed drive comprises a first stage for converting an alternative voltage from an electric network to a continuous voltage; and a second stage for converting the continuous voltage to a variable voltage.

More precisely, the first stage comprises a rectifier sub-stage with a rectifier bridge allowing rectifying the alternative voltage provided by the electric network. The first stage also comprises a filtering sub-stage for filtering the rectified voltage to obtain a continuous voltage. The filtering sub-stage, also called Direct-Current Bus (DC-bus), or Direct-Current Link (DC-link) may comprise capacitors for filtering the rectified voltage. Hence, at the output of the filtering stage, a continuous voltage is available and can be inputted in the second stage. The first stage therefore corresponds to an Alternative Current (AC)/Direct-Current (DC) converter, also called AC/DC converter.

The second stage corresponds to an inverter stage and comprises controlled switches, for example Insulated-Gate Bipolar Transistor (IGBT), for converting the continuous voltage into a variable voltage. The second stage therefore corresponds to a DC/AC converter stage.

Hence, at the output of the inverter stage, a variable voltage is available to control an electric motor, which can therefore be controlled at several operating points with different speeds.

However, connecting a variable speed drive to an electric network may produce several electric behaviors which have to be controlled to avoid producing damages to the electric network, or to the components of the variable speed drive and of the electric motor.

The present disclosure improves the current situation.

### BRIEF DESCRIPTION OF THE DRAWINGS

Figure 1a schematically illustrates an example of a linear variation of firing angles of a thyristor over time.
Figure 1b schematically illustrates an example of a non-linear variation of firing angles of a thyristor over time.
Figure 2 schematically illustrates an example of a system comprising an electrical converter.
Figure 3 schematically illustrates another example of a system comprising an electrical converter.
Figure 4 schematically illustrates yet another example of a system comprising an electrical converter.
Figure 5 schematically illustrates an example of a method according to the present disclosure.
Figure 6 schematically illustrates an example of the implementation of an operation 110 of an example method.
Figure 7 schematically illustrates four electrical signals resulting from an example method comprising the example of implementation of the operation 110. The comparison of the signals U_{comp} and U_{ref} allow implementing a PWM function, the signal U₂ corresponds to a voltage signal in a phase of an alternating power source, and the signal U_{DC} corresponds to the voltage in the DC-link.
Figure 8 schematically illustrates a functional diagram of an example method.
Figure 9a schematically illustrates a voltage ramp-up and intensity values of the current in a DC-link when using a non-linear voltage signal U_{ref} of a PWM function evolving as a second order polynomial function of the time.
Figure 9b schematically illustrates a voltage ramp-up and intensity values of the current in a DC-link when using a non-linear voltage signal U_{ref} of a PWM function presenting a sigmoidal shape during time.
Figure 10 schematically illustrates another example of a method according to the present disclosure.
Figure 11 schematically illustrates an example of the implementation of an operation 140 of an example method.

### DETAILED DESCRIPTION

In AC/DC converters powered by AC mains supply, meeting regulation standards for voltage and current harmonics, both for each rank of harmonic and for total harmonic distortion (referred as THDi hereinafter), is mandatory. Such standards are for instance International Electrotechnical Commission (IEC) 61000-3-12 or IEEE519. The initial stage of a variable speed drive (VSD), the AC/DC converter, must adhere to these technical constraints for its electric behavior.

To comply with these regulations, various passive AC/DC converters of VSDs have therefore been designed by the inventor. The inventor aimed not only to meet regulations but also to create a compact and lightweight VSD, aligning with market demands. Passive AC/DC converters utilize natural switching components, i.e. non-controlled components, for example diode bridges.

In their VSD design, the inventor proposed a DC-link comprising sizable capacitors (for example greater than 1000 uF) combined with AC line inductors or DC-link inductors to mitigate VSD-generated harmonics. However, these sizable capacitors and inductors, though effective, are expensive, bulky, and add weight to the VSD. Additionally, the significant current draw required to load the sizable capacitors might potentially damage the electric components of the network, of the VSD, or of the motor.

To address the high current draw issue, the inventor has introduced a pre-charge circuit with resistors to smoothly increase the DC-link voltage, and therefore reducing the capacitors' initial current draw. These resistors are later bypassed by power contactors to access the full power of the mains supply. However, the pre-charge circuit and power contactors significantly affect the VSD's size, weight, and cost, especially for larger AC/DC power converters.

In search of an alternative solution, the inventor introduced a mix rectifier bridge comprising Silicon-Controlled Rectifiers (SCRs or thyristors) and diodes. This 'mix' rectifier bridge combines active (thyristors) and passive (diodes) components, eliminating the need for a pre-charge circuit to smoothly increase the DC-link voltage.

However, the inventor has noticed that, although the mix rectifier bridge functions well with DC-link housing significant capacitors, it leads to high oscillating current spikes when used with DC-link housing small capacitors (around 15 uF/kW). A DC-link housing small capacitors is generally known as a C-Less link, or as a DC-link presenting a C-Less topology. The oscillating current peaks induced by the mix bridge especially arise when the variable speed drive controls an electric motor comprising a nominal power (or rated power) greater than 15kW.

Despite this, a C-Less Link offers advantages for a variable speed drive. It produces interesting THDi levels, i.e. THDi levels complying with the regulations, while being smaller, lighter, offering better thermal management, and being cost-effective compared to standard DC-links. Hence, the inventor has found out a solution with a C-Less Link and a pre-charge circuit comprising resistors latter bypassed by power contactors to address the high current draw issue, and to benefit from the advantages of the C-Less Link.

However, as explained before, using a pre-charge circuit and power contactors increases the VSD's size, weight, and cost.

The inventor therefore proposes, in the present disclosure, a solution allowing a variable speed drive to present both a mix bridge, and a C-Less Link, while reducing the intensity of the current peaks, and at least reducing, or even removing, the oscillation of the current in the converter during the voltage load. That is, the variable speed drive according to the solution is small, light, complies with the regulation standards for harmonics, offers a good thermal management, is cost-effective, and can be used for high power electric motor, especially motor comprising a nominal power greater than 15kW.

The solution offered by the inventor ingeniously amends the command law of the thyristors of the mix bridge to produce a non-linear variation of firing angles of the thyristors over time instead of having a linear variation (or proportional variation) of firing angles of the thyristors over time during the voltage ramp-up.

An angle should be understood in this description as corresponding to a specific time. The terminology angle is reflecting the fact that the considered electrical signals are sinusoidal signals. When mentioning a "zero-voltage angle", it should be understood that such angle corresponds to a specific time at which the voltage takes a zero value. When mentioning a "zero-current angle", it should be understood that such angle corresponds to a specific time at which the current takes a zero value. A firing angle corresponds to a specific time at which a thyristor is fired. The terminology "angle" reflects that such angle related times are periodical and that related actions get repeated periodically, i.e. repeated at each periodical cycle (period T) of the considered electrical signal. In particular, at a firing angle, an electric signal (a trigger pulse) is supplied to the gate of the thyristor 310b to switch the thyristor from a blocking state to a passing state.

A thyristor may for example be controlled based on an *α* command, that is, by supplying the gate of a thyristor with a delay corresponding to an angle *α* and following an angle where the phase voltage of the considered electric signal becomes equal to zero (zero-voltage angle) from a negative phase. The angle *α* associated to a thyristor is therefore calculated starting from a zero-voltage angle following a negative phase of the voltage.

A thyristor may alternatively be controlled based on a y command, that is, by supplying the gate of the thyristor with a delay corresponding to an angle y and following an angle where the phase current of the electric network becomes equal to zero (zero-current angle) from a negative phase. The angle y associated to a thyristor is therefore calculated starting from a zero-current angle following a negative phase of the current.

We therefore understand that depending on the firing angle, a thyristor can block the power or can let pass more or less power from the mains supply to the DC-link. Hence, the present disclosure defines as a "closed firing angle" a firing angle wherein the thyristor blocks the power from the mains supply (or from any electrical power source connected to the thyristor like the alternating power source 2 described hereinafter). The present disclosure defines as a "fully opened firing angle" a firing angle wherein the thyristor let passes all the power that it can let pass from the mains supply (or from any electrical power source connected to the thyristor like the alternating power source 2) to the DC-link.

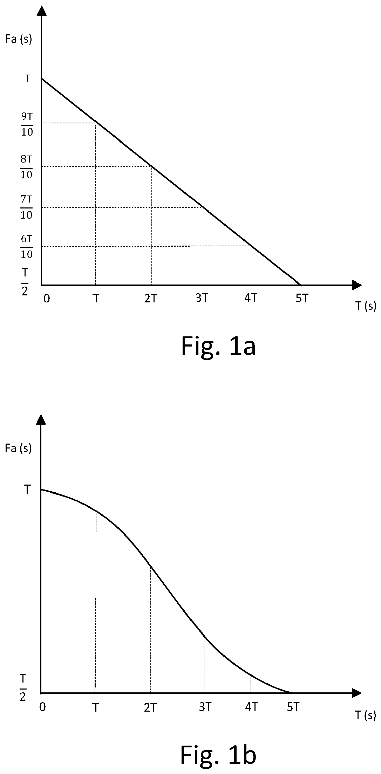

By linear variation of firing angles of a thyristor over time, it should be understood in the present disclosure that a variation of firing angles Fa during each period of the mains supply T, is significantly the same during periods of the mains supply between a closed firing angle and a fully opened firing angle. In other words, the command law of the thyristor is computed such that, during periods of a mains supply between the closed firing angle and the fully opened firing angle, the firing angles of the thyristor are reduced from a constant value (which corresponds to a constant angle or a constant amount of time). Figure 1a represents a schematic example of linear variation of firing angles Fa of a thyristor over time. In this example, it is considered that the thyristor is controlled to pass from a closed firing angle (equal to T in the figure) to a fully opened firing angle (equal to T/2 in the figure) in 5 periods of the mains supply. As it is illustrated, at each period T of the main supply, the firing angle is reduced from 1/5T, such that a firing angle variation between successive periods T of the main supply is the same.

By non-linear variation of firing angles of a thyristor over time, it should be understood in the present disclosure that a variation of firing angles Fa during each period of the mains supply T, is different during periods of the mains supply between a closed firing angle and a fully opened firing angle. That is, the command law of the thyristor is determined such that, during periods of a mains supply between the closed firing angle and the fully opened firing angle, the firing angles of the thyristor are reduced from a variable value (which corresponds to a variable angle or a variable amount of time) associated to the period. Figure 1b represents a schematic example of non-linear variation of firing angles Fa of a thyristor over time. In this example, it is considered that the thyristor is controlled to pass from a closed firing angle (equal to T in the figure) to a fully opened firing angle (equal to T/2 in the figure) in 5 periods of the mains supply. As it is illustrated, at each period T of the mains supply, the firing angle is reduced from a different value, the variation of the firing angles Fa of the thyristor being non-linear over time.

The inventor has especially noticed that a non-linear variation of firing angles of the thyristors over time allows having a smooth current ramp-up in the input current of the capacitors of the DC-link of the VSD while significantly reducing the intensity of the current peaks compared to a proportional (linear) variation of firing angles over time. It is important to note that amending the command law of the thyristors, if the command law is software-implemented, may not require to add any passive or active components which would lead to increase the cost of the drive.

The inventor has also found out that having a non-linear variation of firing angles over time of a thyristor in any topology of the DC-links (C-Less or not) of any electrical converters (VSD or other systems), may also reduce the intensity of the current peaks, the current oscillations in the DC-link, and/or the voltage ramp-up time. Hence, the solution may be applied to other topologies than the C-Less topology of DC-links, and/or to other systems than a variable speed drive driving an electric motor, as long as this system comprises an AC/DC converter controlled by at least one thyristor.

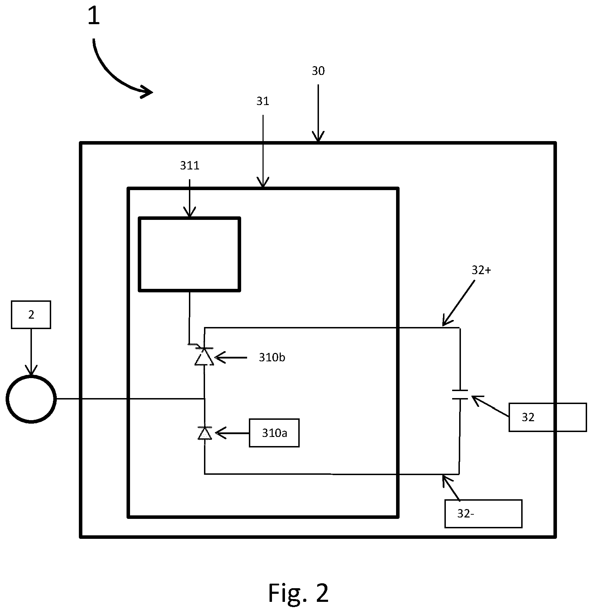

With reference to figures 2 to 4, it is now described examples of systems 1 in which a method according to any one of the examples described in the present disclosure may be implemented.

The examples of systems 1 comprise an alternating power source 2 providing an alternating voltage to an electrical converter 30 adapted to convert an alternating voltage to a continuous voltage. The electrical converter 30 is therefore connected to the alternating power source 2. The electrical converter 30 corresponds to an AC/DC converter.

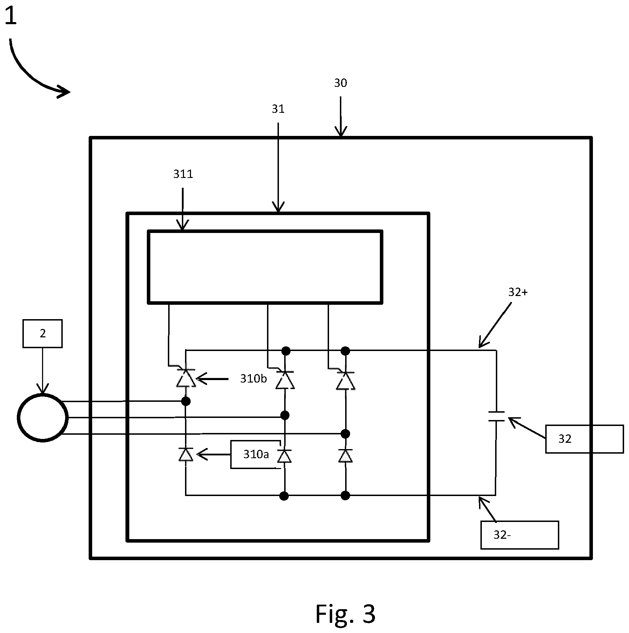

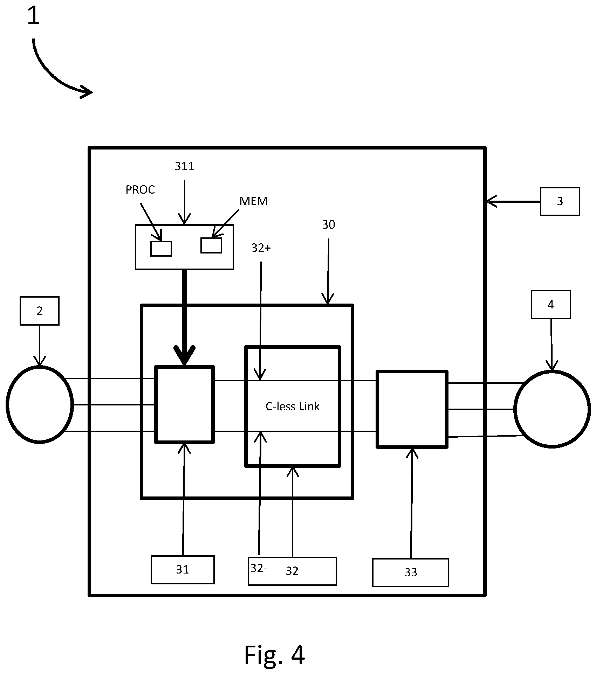

The alternating power source 2 may correspond to an electric network or mains supply. The alternating voltage AC may for example comprise one phase (as illustrated in figure 1) or more than one phase. Examples of systems 1 comprising a three-phase alternating power source 2 are schematically illustrated in figures 3 and 4.

The electrical converter 30 comprises a rectifier 31 and a DC-link 32. The rectifier 31 rectifies the voltage provided by the alternating power source 2 and the DC-link 32 filters the rectified voltage to obtain a significantly continuous voltage 32.

A DC-link 32 may be defined as a circuit configured to stabilize the voltage of a direct power bus. The DC-link 32 especially comprises a positive bus 32+ and a negative bus 32-. In some examples, the DC-link presents a C-Less topology, for example a small film capacitor having an order of magnitude of 15 uF/kW. In other examples, the DC-link may comprise at least one of:
- an electrolyte capacitor having an order of magnitude of 100 uF/kW; or
- DC-link inductors.

The rectifier 31 of the electrical converter 30 comprises a dedicated arm for each phase of the alternating power source 2. Hence, an arm of the rectifier 31 is connected to a phase of the alternating power source 2. In examples wherein the alternating power source 2 comprises more than one phase, each arm of the electrical converter 30 is connected to a respective phase of the alternating power source 2.

An arm of the rectifier 31 is connected on one side to the positive bus 32+ and on another side to the negative bus 32- of the DC-link 32. An arm of the rectifier 31 comprises a diode 310a and a thyristor 310b connected in series. The cathode of the thyristor 310b is connected to the positive bus 32+ of the DC-link 32. The anode of the thyristor 310b is connected to the cathode of the diode 310a. The anode of the diode 310a is connected to the negative bus 32- of the DC-link 32. A phase of the alternating power source 2 is connected to an arm of the rectifier at a middle point located between the anode of the thyristor 310b and the cathode of the diode 310a, as schematically illustrated in figures 2 and 3.

The rectifier 31 also comprises a control circuit 311 allowing controlling a thyristor of an arm of the rectifier 31 to trigger (or fire) this thyristor in due time. The control circuit 311 is especially configured to send an electric signal E_{trig} (for instance a trigger pulse) to the gate of the thyristor 310b for firing the thyristor 310b, i.e. in order to switch the thyristor 310b from a blocking state to a passing state. Hence, the thyristor may pass a fraction of the power from the alternating power source 2 to the DC-link 32 when receiving the electric signal E_{trig} on its gate. In examples wherein the rectifier comprises several thyristors (i.e. when the alternating power source 2 comprises several phases), the control circuit 311 may control all the thyristors 310b.

In some examples, the control circuit 311 may for example comprise a controller PROC and a memory MEM, as schematically illustrated in figure 4.

The controller PROC may be configured to control a thyristor 310b of the rectifier 31 by controlling the supply of its gate with an appropriate electric signal E_{trig}. In these examples, the processor PROC may be configured to operate according to any examples of the method 100 hereby described.

The controller PROC may for example correspond to a microcontroller, a microprocessor, a processor, or any type of computing devices or computing circuits.

The memory MEM may correspond to a non-transitory machine-readable or computer readable storage medium. The memory MEM may be encoded with instructions executable by a controller such as the controller PROC. The memory MEM may comprise instructions to operate the controller PROC to perform at least part of the examples of the method 100 hereby described. The memory MEM according to this disclosure may be any electronic, magnetic, optical or other physical storage device that stores executable instructions. The memory MEM may be, for example, Random Access Memory (RAM), an Electrically Erasable Programmable Read Only Memory (EEPROM), a storage drive, an optical disk, and the like. The controller PROC has therefore access to the information stored in the memory.

In some examples, the control circuit 311 may comprise a Field Programmable Gate Array, FPGA, allowing controlling a thyristor (or all the thyristors) of the rectifier 31 by controlling the supply of its gate with the appropriate electric signal E_{trig}. As explained for the controller PROC, the FPGA may be configured to operate according to any examples of the method 100 hereby described.

In some examples, the control circuit 311 may comprise a dedicated Application Specific Integrated Circuit, ASIC, allowing controlling a thyristor (or all the thyristors) of the rectifier 31 by controlling the supply of its gate with the appropriate electric signal E_{trig}. As explained for the controller PROC and for the FPGA, the ASIC may be configured to operate according to any examples of the method 100 hereby described.

In the example of system 1 schematically illustrated in figure 4, the power converter 30 is a part of a variable speed drive 3 adapted to drive an electric motor 4.

A variable speed drive 3 should be understood in this disclosure as an electronic, electrical, virtual or software implemented control unit for an electric motor. A variable speed drive may control an electric motor 4 using an electric or electronic command and in particular may apply a determined voltage to the motor.

The variable speed drive 3 especially comprises an inverter 33 to apply an alternating voltage to an electric motor 4, as well known by the person skilled in the art.

An electric motor 4 should be understood in this disclosure as any kind of electric motors which may be driven by a variable speed drive.

The electric motor 4 driven by the variable speed drive 3 in the example of system 1 illustrated in figure 4 may for example comprise a nominal power greater than 15kW.

In some examples, the system 1 may for example comprise a voltmeter (not shown) for acquiring voltage measurements of each phase of the alternating power source 2. In some examples, the system 1 may also comprise a voltmeter for acquiring voltage measurements of the DC-link 32. In these examples, the voltmeter measures a voltage applied between the positive bus 32+ and the negative bus 32-. A voltmeter may for example be included in the variable speed drive 3.

In some examples, the system 1 may for example comprise an ammeter (not shown) for acquiring current measurements of the DC-link 32. The ammeter may for example be included in the variable speed drive 3.

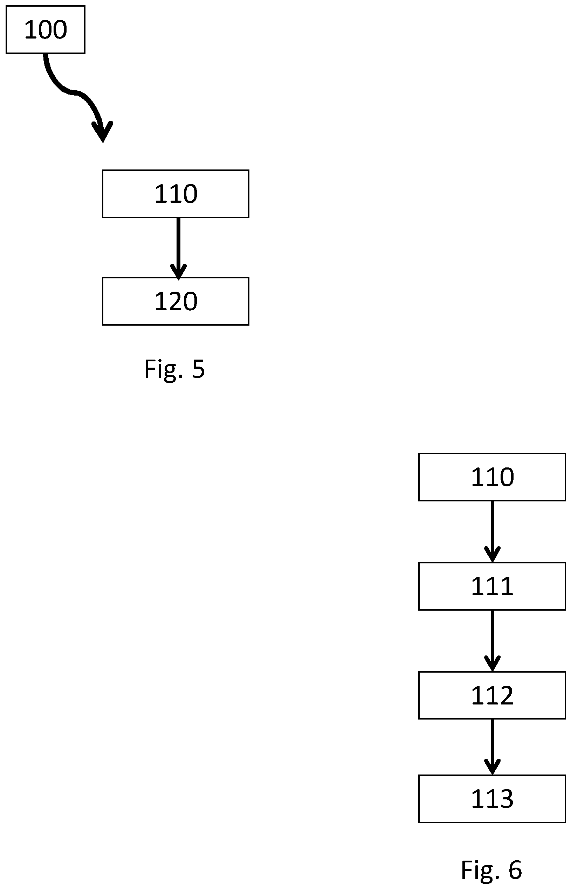

It is now described with reference to figure 5 an example of computer-implemented method 100 for controlling a ramp-up of a voltage in a DC-link 32 of an electrical converter 30 in order to reach a significantly continuous voltage in the DC-link 32. As previously explained, the examples of method 100 may be applied in any one of the examples of systems 1 described here.

It should be noted that the examples of the method 100 illustrated in the figures are merely an illustration of examples of process representing, by means of blocks, the various operations that may be included in the process and described in the remainder of the document. As such, this illustration does not reflect any seriality between operations. In other words, the operations described with reference to the method 100 illustrated in the figures are not necessarily implemented one after the other, and may in particular be implemented in a different order from the ones shown in the figures, or be implemented in parallel, unless when an operation needs the output of another operation to be implemented. Similarly, it is not necessary for each operation to be implemented once before that a same operation could be performed a second time. The frequency of the implementation of each operation is specific to it and is not necessarily linked to the implementation of the other operations.

A ramp-up of a voltage in a DC-link may be defined in the present disclosure as a rise of a voltage in a DC-link between a first voltage value, and a second voltage value. The second voltage value corresponds to a voltage value at which the voltage in the DC-link may be considered significantly constant (stable) in view of the targeted application of the power converter.

As illustrated in operation 110, the method 100 comprises determining a command law of the thyristor 310b for producing a non-linear variation of firing angles Fa of the thyristor 310b over time. That is, the operation 110 determines a command law such that variation of the fire angles Fa of the thyristor between the closed firing angle and the fully opened firing angle is evolving during periods T of the alternating power source 2. In other terms, a command law of the thyristor 310b for producing a non-linear variation of firing angles Fa of the thyristor 310b over time corresponds to a command law producing an evolving change or a variable rate of change of a fire angle Fa of the thyristor 310b during periods T of the alternating power source 2 between the closed firing angle and the fully opened firing angle.

It should be noted that the operation 110 may be implemented for each thyristor 310b of the rectifier 31 in examples wherein the alternating power source 2 comprises more than one phase.

As illustrated in operation 120, the method 100 comprises applying the command law to the thyristor.

A command law of the thyristor producing a non-linear variation of firing angles Fa of the thyristor over time allows reducing or even removing the current oscillations in the DC-link by obtaining a smooth current ramp-up in the DC-link while significantly reducing the intensity of the current peaks; compared to a control of the thyristor wherein the firing angles Fa are determined to present a proportional variation over time. Moreover, a non-linear variation of firing angles Fa of the thyristor over time may also reduce the duration of the voltage ramp-up before reaching the significantly continuous voltage.

Hence, the inventor has overcome a technical prejudice which has considered that the firing angles Fa should be determined to present a linear variation over time to provide optimal results. To the contrary, the inventor proposed in the present disclosure to determine firing angles of the thyristors such that they deliberately present a non-linear variation over time, which turns to reduce intensity of current peaks and mitigate or even remove current oscillations of the DC-link, therefore protecting the electrical components of the system.

It should be noted that, although the examples of method 100 are presented for a thyristor 310b, the method 100 may be applied for each thyristor of an electrical converter 30.

In some examples, the command law of the thyristor is based on a pulse width modulation, PWM, function. In these examples, a non-linear variation of the firing angles Fa of the thyristor 310b over time is obtained by a non-linear variation of a duty cycle of the PWM function over time. In these examples, an electric signal E_{trig} triggering the thyristor 310b may for example be applied when a PWM signal, synchronized on a voltage period of the alternating power source 2, switches from a low state to a high state or *vice versa.* Hence, by producing a non-linear variation of the duty cycle of the PWM signal over time, i.e. by adding a variable (non-constant) value to the duty cycle at periods T of the alternating power source 2 between the closed firing angle and the fully opened firing angle, a firing angle of the thyristor evolves in a non-linear way over time.

We understand that in examples wherein the alternating power source 2 comprises more than one phase, the command law of each thyristor of the rectifier 31 may be determined based on a respective PWM function producing a non-linear variation of the duty cycle of the PWM signal over time.

As it is well known in the art, various implementations of a PWM function may be set up. Hence, although the present disclosure presents below an example of implementation of a PWM function producing a non-linear variation of the duty cycle of the PWM function, other implementations of PWM function may be envisaged for the same purpose of non-linear duty cycle variation over time.

In some examples of the method 100 wherein the command law of the thyristor is based on a PWM function, the operation 110 of determining a command law of the thyristor may comprise three other complementary operations 111, 112, and 113. These examples are schematically illustrated in figure 6.

The first complementary operation 111 comprises obtaining voltage measurements U₂ of the alternating power source 2. These voltage measurements U₂ may for example be acquired by a voltmeter, which may be a part of a variable speed drive 3 where appropriate. In examples wherein the alternating power source 2 comprises more than one phase, voltage measurements U₂ of each phase of the alternating power source 2 may be obtained.

The second complementary operation 112 comprises synchronizing a period of a sawtooth voltage signal U_{comp} of the PWM function with a voltage period T of the alternating power source 2 based on the voltage measurements U₂. This operation 112 aims at synchronizing the period T of the alternating power source 2 with the period of a comparison voltage signal U_{comp} of the PWM function.

Then, the third complementary operation 113 comprises determining a non-linear voltage signal over time U_{ref} of the PWM function, such that a comparison of the non-linear voltage signal over time U_{ref} with the sawtooth voltage signal U_{comp} produces the non-linear variation of a duty cycle of the PWM function.

Here, the PWM function is implemented by a sawtooth voltage signal U_{comp} having a period synchronized with the alternating power source 2, which is compared to a voltage signal U_{ref}. The voltage signal U_{ref} is a non-linear voltage signal over time such that comparing the voltage signal U_{ref} with the sawtooth voltage signal U_{comp}, synchronized with the alternating power source period T, allows producing the non-linear variation of a duty cycle of the PWM function.

Hence, in these examples, an electric signal E_{trig} may be sent to the gate of the thyristor 310b to fire the thyristor 310b when the non-linear U_{ref} voltage signal becomes greater than the sawtooth voltage signal U_{comp}. The thyristor 310b will therefore switch from a blocking state to a passing state and conduct a fraction kU₂ (0 ≤ k ≤ 1) of the alternating voltage U₂ supplied by the alternating power source 2.

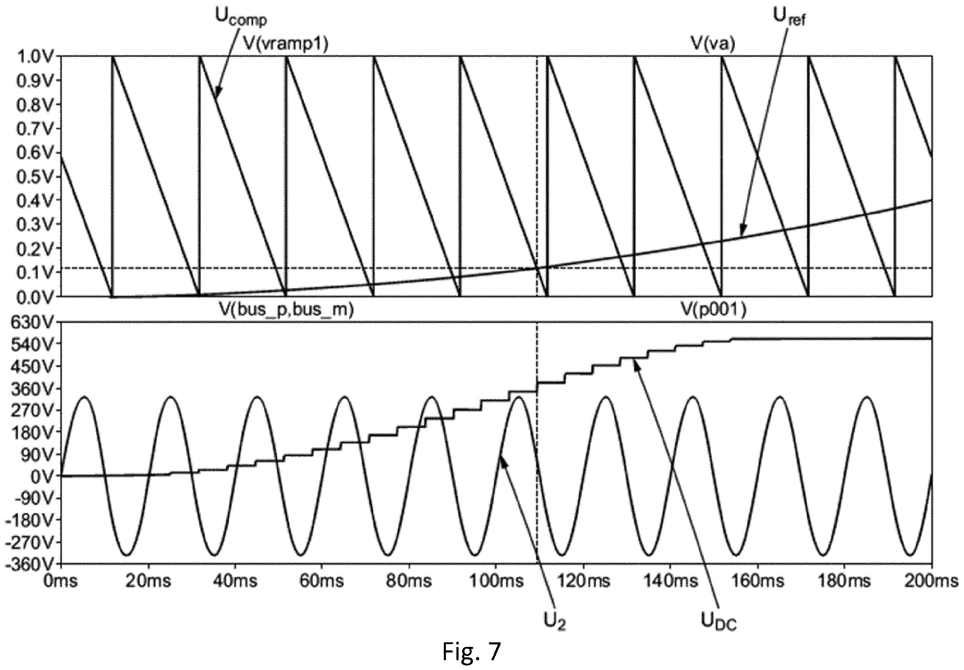

These examples are illustrated in figure 7 wherein four voltage signals (U_{comp}, U_{ref}, U₂ and U_{DC}) are illustrated:
1) the voltage signal U₂ corresponds to a voltage in a phase of a three-phase alternating voltage source 2;
2) the voltage signal U_{DC} corresponds to the voltage in the DC-link 32;
3) the voltage signal U_{comp} corresponds to the sawtooth voltage signal of the PWM; and
4) the voltage signal U_{ref} corresponds to the non-linear voltage signal, over the time, of the PWM.

In figure 7, it should be noted that the voltage of the DC-link 32 is raising three times during a period T of the represented phase U₂ of the three-phase alternating power source 2 considering that the two other thyristors, connected to the two other phases (not shown) of the three-phase alternating power source 2 are also controlled in the same way based on their respective phase period.

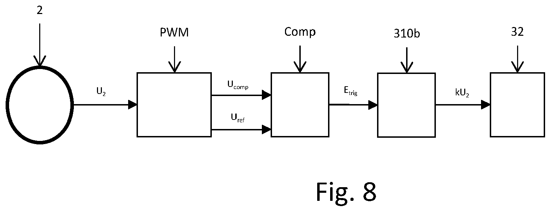

However, other implementations of PWM, for example using other forms of comparison voltage signals U_{comp} (triangular voltage signal for example) with adapted voltage signal U_{ref} may be used for the same purpose. A functional diagram of an example of a PWM implementation is schematically illustrated in figure 8. In this diagram, a block PWM obtains the voltage measurements U₂ of the alternating power source 2 to determine the comparison voltage signal U_{comp} synchronized on the voltage period T of the alternating power source 2. The PWM also determines an adapted voltage signal U_{ref} to be compared to the comparison voltage signal U_{comp} to produce a non-linear variation of the duty cycle of the PWM function. The voltage signals U_{comp} and U_{ref} are then transmitted to a block Comp which compares the signals and generates the electric signals E_{trig} based on the comparison. The electric signals E_{trig} supplies the gate of the thyristor 310b for firing the thyristor, such that a fraction kU₂ of the voltage of the alternating power source 2 passes from the alternating power source 2 to the DC-link 32.

We also understand that in examples wherein the alternating power source 2 comprises more than one phase, the command law of each thyristor of the rectifier 31 may be determined based on a respective non-linear voltage signal U_{ref} of a PWM function.

In examples of the method 100 wherein a period of a voltage signal is synchronized with the voltage period T of the alternating power source 2, the synchronization may be based on a Phase-Locked Loop using the voltage measurements U₂.

In examples of the method 100 comprising the operation 113 of determining a non-linear voltage signal U_{ref} over time, the non-linear voltage signal U_{ref} may be determined to follow a first non-linear function of the time; for example a polynomial function of the time and the polynomial function of the time is at least a second order polynomial function. A person skilled in the art may therefore define the first non-linear function of the time, and configures the command law of the thyristor 310b such that non-linear voltage signal U_{ref} evolves, over time, as the first non-linear function of the time.

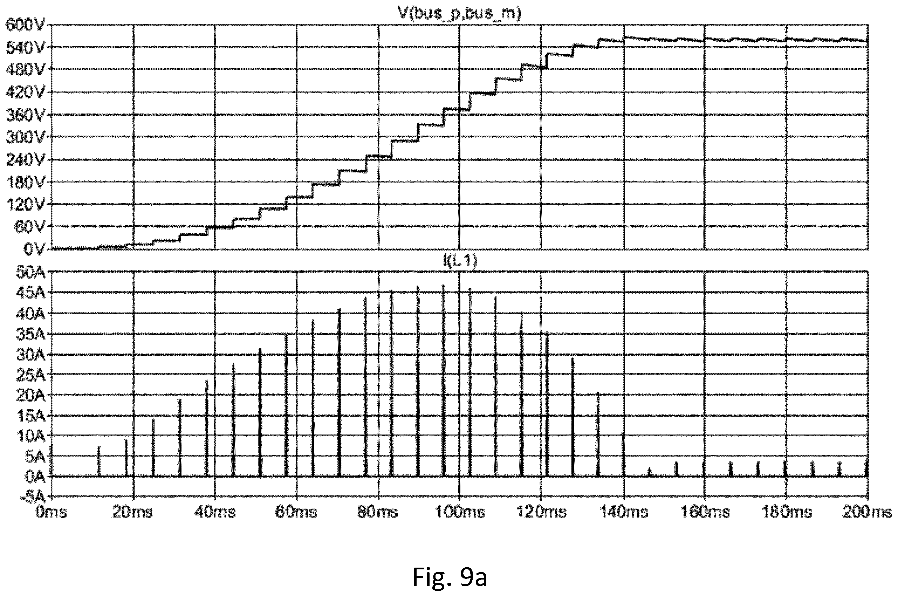

In a first alternative, the first non-linear function of the time may correspond to a second order polynomial function of the time. The inventor has found out that when the polynomial function corresponds to a second order polynomial function, which may be easily implemented compared to greater order functions, the current oscillations in the DC-link during the voltage ramp-up are removed, the current smoothly ramps-up in the DC-link and the intensity of the current peaks is reduced compared to a linear shape of ramp-up. The voltage ramp-up and intensity values of the current in the DC-link 32 when using a non-linear voltage signal U_{ref} evolving as a second order polynomial function of the time are illustrated in figure 9a.

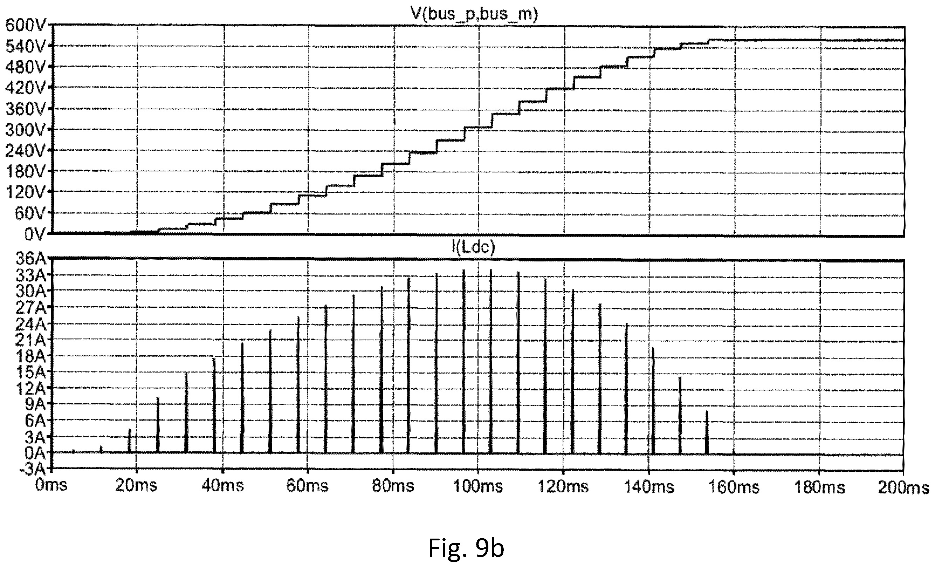

In a second alternative, the first non-linear function of the time may present a sigmoidal shape during time. The voltage ramp-up and the intensity of the DC-link 32 when using a non-linear voltage signal U_{ref} presenting a sigmoidal shape during time is illustrated in figure 9b. Here, the current oscillations in the DC-link during the voltage ramp-up are also removed and the current is also smoothly ramping-up in the DC-link, as for the second order polynomial function of the time. Moreover, the intensity of the current peaks is reduced compared to the second order polynomial function of the time.

In some examples, the non-linear variation of firing angles Fa of the thyristor 310b over time may follow a second non-linear function of the time. That is, the command law of the thyristor 310b is determined to fire the thyristor at an angle which varies over time as a non-linear function. Here, it is proposed to have a control of the variation of firing angles Fa over time based on the second non-linear function which would be defined by an operator, or which may be determined using machine learning, as proposed in an example of method 100 comprising operations 130 and 140 described hereinafter.

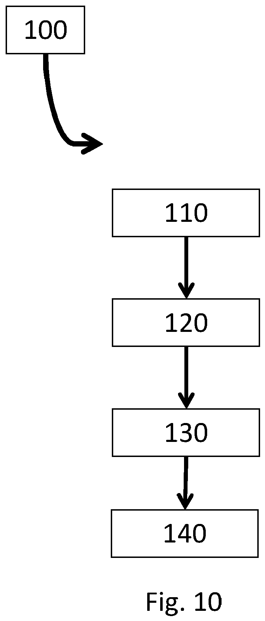

Hence, in some examples wherein the non-linear variation of firing angles Fa of the thyristor 310b over time follows the second non-linear function, the method 100 may further comprise two operations 130 and 140. These examples are schematically illustrated in figure 10.

The operation 130 comprises obtaining voltage and current measurements in the DC-link during the voltage ramp-up of the DC-link. The current measurements in the DC-link may for example be acquired by the ammeter, which may be included in the variable speed drive 3 where appropriate. The voltage measurements in the DC-link may for example be acquired by the voltmeter, which may be included in the variable speed drive 3 where appropriate.

The operation 140 comprises training a machine learning model to identify parameters of the second non-linear function for producing a desired electrical response in the DC-link. The desired electrical response may be determined to comply with at least one of the following objectives in view of a default electrical response of the DC-link during a voltage ramp-up:
1) mitigate values of intensity peaks of the current in the DC-link during the voltage ramp-up;
2) mitigate or remove the current oscillations in the DC-link during the voltage ramp-up; or
3) reduce the voltage ramp-up time in the DC-link.

An electrical response of the DC-link may be determined based on the voltage and current measurements of the operation 130. Hence, by obtaining the voltage and current measurements of the DC-link during the voltage ramp-up, an electrical response of the DC-link may be determined and parameters of the second non-linear function may be identified, for example iteratively, to produce a desired electrical response.

In some examples, a default electrical response may for example correspond to the electrical response of the DC-link when the command law of the thyristor produces a linear variation of firing angles Fa of the thyristor 310b over time. In some other examples, a default electrical response may for example correspond to the electrical response of the DC-link when the command law of the thyristor produces a non-linear variation of firing angles Fa of the thyristor 310b over time of a previous iteration of the method 100.

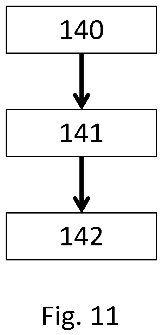

In the examples wherein the method 100 comprises the operations 130 and 140, the method 100 may comprise a plurality of iterations and the operation of training 140 may comprise, for each of the plurality of iterations of the method 100, two further operations 141 and 142, as illustrated in figure 11.

The operation 141 comprises determining a score associated to the parameters of the second non-linear function. The score is determined based on a determined electrical response of the DC-link at the given iteration (i.e. at a given voltage ramp-up). As previously explained, an electrical response of the DC-link at a given iteration of the method 100 may be determined based on the voltage and current measurements obtained in operation 130.

In examples wherein the desired electrical response is determinate to mitigate values of intensity peaks of the current in the DC-link during the voltage ramp-up compared to a default electrical response, the score associated to the parameters of the second non-linear function may be determined based on at least one of:
- an average value of intensity of current peaks during the voltage ramp-up; or
- a highest value of intensity of a current peak among a plurality of current peaks appearing in the DC-link during the voltage ramp-up.

In examples wherein the desired electrical response is determinate to mitigate or remove the current oscillations in the DC-link during the voltage ramp-up compared to a default electrical response, the score associated to the parameters of the second non-linear function may be determined based on at least one of:
- a presence or an absence of current oscillations in the DC-link; or
- a shape of current evolution during the voltage ramp-up.

In examples wherein the desired electrical response is determinate to reduce the voltage ramp-up time in the DC-link compared to a default electrical response, the score associated to the parameters of the second non-linear function may be determined based on a voltage ramp-up duration (or voltage ramp-up time) of the voltage ramp-up, until the voltage of the DC-link reaches the significantly continuous voltage.

The operation 142 comprises storing in a memory, for example the memory MEM, the parameters of the second non-linear function. The parameters are stored in association with their determined score.

That is, in these examples, at each iteration of the method 100 among a plurality of iterations, new parameters for the second non-linear function may be determined and tested to determine a score associated with these parameters. Hence, interesting parameters may be determined by iteratively modifying the parameters of the second non-linear function.

It should be noted that in some alternative examples, the parameters of the first non-linear function over time, i.e. the function that the non-linear voltage signal U_{ref} follows, may be determined using the same machine learning technique. Hence, instead of directly determining the parameters of the function that the variation of the firing angles Fa of the thyristor 310b follows over time (the second non-linear function), the example method 100 may apply the operations 130 and 140 to determine the parameters of the first non-linear function. Hence, in these examples, the sawtooth voltage signal U_{comp} would be compared to the non-linear voltage signal over time U_{ref} which follows the first non-linear function over time, and the parameters of this first non-linear function would be determined by machine learning.

In some examples, once the machine learning model is trained, the parameters of the first or second non-linear function (depending on the training) correspond to the parameters associated with the highest score in memory. Hence, in these examples, once the machine learning model is trained, the method 100 uses the parameters associated with the highest score in the memory to obtain the non-linear function, such that the more interesting electrical response of the DC-link, symbolized by the highest score of the parameters, may be obtained during the voltage ramp-up.

Hence, in the examples of method 100 wherein a model is trained to identify the parameters of the first or of the second non-linear function, the method 100 may be highly personalized to the application in which the electrical converter 30 is intended to be used. Indeed, the response of the DC-link 32 depends on the electrical parameters of the load, of the alternating power source 2, and of the variable speed drive where appropriate. By training a model identifying the parameters of the non-linear function to produce a desired electrical response directly on the targeted application of the electrical converter 30, the obtained parameters once the model is trained on the targeted application may be optimal for this application.

The present disclosure also presents a computer-readable storage medium comprising instructions which, when executed by at least one controller, cause the controller to carry out any one of the examples of method 100 presented hereby.

The present disclosure also describes a computer program product comprising instructions which, when the program is executed by a computer, cause the computer to carry out any one of the examples of method 100 hereby described.

The present disclosure cleverly proposes to modify the command law of a thyristor of an electrical converter to introduce a non-linear variation of firing angles of the thyristors over time to load the DC-link capacitors. A non-linear variation of firing angles of the thyristors over time allows a variable speed drive to present both a mix bridge, and a C-Less Link, while reducing the intensity of the current peaks, and at least reducing, or even removing, the oscillation of the current in the converter during the voltage load. That is, the variable speed drive according to the solution is small, light, complies with the regulation standards for harmonics, offers a good thermal management, is cost-effective, and can be used for high power electric motor, especially motor comprising a nominal power greater than 15kW.

More generally, amending the command law of a thyristor of an electrical converter to introduce a non-linear variation of firing angles of the thyristors over time to load the DC-link capacitors may be applied to any topology of DC-links (C-Less or not) of any electrical converters (VSD or other systems) while still reducing the intensity of the current peaks, and at least reducing, or even removing the oscillations of the current in DC-link during the voltage ramp-up. This new control of the thyristor, if software-implemented, may be implemented without adding any additional components, which would increase the manufacturing cost of the electrical converter.

As previously explained, the inventor has overcome a technical prejudice which has considered that a variation of firing angles of the thyristors over time during the voltage ramp-up should be proportional to provide optimal results. Instead, the inventor has found out that an electrical behavior of the DC-link may be improved by a non-linear variation of firing angles of the thyristors over time during the voltage ramp-up.

Moreover, in some examples of the method 100, a machine learning model may be trained to identify the appropriate parameters of the first and second non-linear function allowing controlling the thyristor, which may therefore be highly specific to the targeted application of the electrical converter.

## Claims

1. A computer-implemented method (100) for controlling a ramp-up of a voltage (U_{DC}) in a DC-link (32) of an electrical converter (30) connected to an alternating power source (2) in order to reach a significantly continuous voltage in the DC-link (32);
wherein the DC-link (32) comprises a positive bus (32+) and a negative bus (32-); wherein the electrical converter (30) comprises an arm connected to a phase of the alternating power source (2);
the arm being connected on one side to the positive bus (32+) and on another side to the negative bus (32-) of the DC-link (32) and comprising a diode (310a) and a thyristor (310b) connected in series;
wherein the method (100) comprises:
determining (110) a command law of the thyristor (310b) for producing a non-linear variation of firing angles (Fa) of the thyristor (310b) over time; and
applying (120) the command law to the thyristor.

2. A method according to the preceding claim, wherein the command law of the thyristor is based on a pulse width modulation, PWM, function; and
wherein a non-linear variation of the firing angles (Fa) of the thyristor (3 10b) over time is obtained by a non-linear variation of a duty cycle of the PWM function over time.

3. A method according to the preceding claim, wherein determining (110) a command law for the thyristor (310b) comprises:
obtaining (111) voltage measurements (U₂) of the alternating power source (2);
synchronizing (112) a period of a sawtooth voltage signal (U_{comp}) of the PWM function with a voltage period of the alternating power source (2) based on the voltage measurements (U₂); and
determining (113) a non-linear voltage signal over time (U_{ref}) of the PWM function, such that a comparison of the non-linear voltage signal over time (U_{ref}) with the sawtooth voltage signal (U_{comp}) produces the non-linear variation of a duty cycle of the PWM function.

4. A method according to the preceding claim, wherein the period of the sawtooth voltage signal (U_{comp}) of the PWM is synchronized (112) with the voltage period of the alternating power source (2) based on a phase-locked loop.

5. A method according to claim 3 or 4, wherein the non-linear voltage signal over time (U_{ref}) follows a first non-linear function of the time.

6. A method according to the preceding claim, wherein the first non-linear function corresponds to a second order polynomial function of the time.

7. A method according to claim 5, wherein the first non-linear function presents a sigmoidal shape during time.

8. A method according to any of the preceding claims, wherein the non-linear variation of firing angles (Fa) of the thyristor (310b) over time follows a second non-linear function.

9. A method according to the preceding claim, further comprising:
obtaining (130) voltage and current measurements in the DC-link during the voltage ramp-up of the DC-link;
training (140) a machine learning model to identify parameters of the second non-linear function in order to produce a desired electrical response in the DC-link;
wherein an electrical response in the DC-link is determined based on the obtained voltage and current measurements;
and wherein a desired electrical response of the DC-Link is determined to comply with at least one of the following objectives in view of a default electrical response of the DC-link during a voltage ramp-up:
1) mitigate values of intensity peaks of current in the DC-link during the voltage ramp-up;
2) mitigate or remove the current oscillations in the DC-link during the voltage ramp-up; or
3) reduce the voltage ramp-up time in the DC-link.

10. A method according to the preceding claim, wherein the method (100) is iterated a plurality of times;
and wherein the training (140) comprises, for each of the plurality of iterations of the method:
determining (141) a score associated to the parameters of the second non-linear function, based on a determined electrical response of the DC-link at the given iteration; and
storing (142) in a memory the parameters of the second non-linear function associated with the determined score.

11. A method according to the preceding claim, wherein, once the machine learning model is trained (140), the parameters of the second non-linear function correspond to the parameters associated with the highest score in memory.

12. A computer-readable storage medium comprising instructions which, when executed by at least one controller, cause the at least one controller to carry out the method of any one of the above method claims.

13. A variable speed drive (3) adapted to drive an electric motor (4), the variable speed drive (3) comprising a rectifier (31), an inverter (33) and a DC-link (32);
wherein the DC-link (32) comprising a positive bus (32+) and a negative bus (32-) and being adapted to supply the inverter (33) with a significantly continuous voltage;
wherein the rectifier (31) comprises a mix bridge (310) with three arms connected to a respective phase of a three-phase power source (2);
each arm being connected on one side to the positive bus (32+) and on another side to the negative bus (32-) of the DC-link (32) and comprising a diode (310a) and a thyristor (310b) connected in series;
the variable speed drive being configured to carry out the method of any one of the above method claims.

14. A variable speed drive according to the preceding claim, wherein the variable speed drive also comprises a controller (PROC) adapted to carry out the method of any one of the above method claims.

15. A system (1) comprising a variable speed drive (3) according to any of the claims 13 or 14 and an electric motor (4) comprising a nominal power greater than 15kW.
